# EUROPÄISCHE PATENTSCHRIFT

(11) **EP 0 476 755 B1**
(45) Veröffentlichungstag und Bekanntmachung des Hinweises auf die Patenterteilung: **04.12.1996**
(21) Anmeldenummer: 91202322.3
(22) Anmeldetag: 11.09.1991
(51) Int. Cl.: H04M 1/00, H04M 1/72

(54) **Fernsprechapparat für ein dienstintegriertes digitales Nachrichtennetz (ISDN)**
Subscriber set for an integrated services digital network (ISDN)
Poste téléphonique pour réseau numérique à intégration de services (RNIS)

(30) Priorität: 18.09.1990 DE 4029528
(43) Veröffentlichungstag der Anmeldung: 25.03.1992
(73) Patentinhaber: Philips Patentverwaltung GmbH, 22335 Hamburg (DE); Philips Electronics N.V., 5621 BA Eindhoven (NL)
(72) Erfinder: Höflinger, Jürgen, Dipl.-Ing., W-8505 Röthenbach Pegnitz (DE)
(74) Vertreter: Volmer, Georg, Dipl.-Ing.

(56) Entgegenhaltungen:
- EP-A- 0 408 024
- PATENT ABSTRACTS OF JAPAN vol. 14, no. 18 (E-873)16. Januar 1990 & JP-A-12 60 962
- PATENT ABSTRACTS OF JAPAN vol. 13, no. 490 (E-841)7. November 1989 & JP-A-11 94 732
- PATENT ABSTRACTS OF JAPAN vol. 14, no. 151 (E-906)22. März 1990 & JP-A-20 09 295
- ELEKTRONIK Bd. 38, Nr. 13, Juni 1989, MUNCHEN Seiten 76 - 86 , XP120497 RUGE ET AL 'SCHLUSSELTECHNOLOGIE MIKROELEKTRONIK'
- IEEE/IEICE GLOBAL TELECOMMUNICATIONS CONFERENCE Bd. 3, November 1987, TOKYO JP Seiten 1931 - 1935 , XP10897 CHIEN ET AL 'A SYSTEM S APPROACH TO INDOOR WIRELESS COMMUNICATIONS'
- IEEE INTERNATIONAL CONFERENCE ON COMMUNICATIONS Bd. 3, Juni 1989, BOSTON US Seiten 1309 - 1313 , XP75368 MEYER ET AL 'RADIO SUBSCRIBER LOOPS AND RADIO TERMINALS IN ISDN ERA'

## Beschreibung

Die Erfindung bezieht sich auf einen Fernsprechapparat für ein dienstintegriertes digitales Nachrichtennetz (ISDN) mit einer wenigstens zur übertragung von Signalen zwischen einem leitungsgebundenen Handapparat und einer Anschlußeinheit dienenden Hauptschaltung, welche mit einer Schnittstelle für das dienstintegrierte digitale Nachrichtennetz koppelbar ist.

Das dienstintegrierte digitale Nachrichtennetz (ISDN) ermöglicht eine Vielzahl von Kommunikationsdiensten zwischen einheitlichen standardisierten Benutzerschnittstellen. Für die Übertragung schmalbandiger Nachrichten (Sprache, Daten- und Textkommunikation usw.) über eine Leitung stehen zwei B-Kanäle mit jeweils einer Kapazität von 64 kbit/s zur Verfügung. Als Signalisierungskanal zur Übertragung vermittlungstechnischer Informationen ist ein D-Kanal mit 16 kbit/s vorgesehen. Im Teilnehmerbereich eines dienstintegrierten digitalen Nachrichtennetzes ist eine SO-Schnittstelle vorhanden, an die ein Fernsprechapparat anschließbar ist.

Der oben erwähnte Fernsprechapparat für ein dienstintegriertes digitales Nachrichtennetz ist aus dem Aufsatz "ISDN-Komfortsprechapparat SET 50 mit integrierter Datenschnittstelle" von P. Hirth und B. Lurz, PKI-Technische Mitteilungen, Heft 1, 1988, Seiten 19 bis 22 bekannt. Der Fernsprechapparat ist durch seine Anschlußeinheit mit einer SO-Schnittstelle des dienstintegrierten digitalen Nachrichtennetzes gekoppelt. Gesteuert wird die Anschlußeinheit ebenso wie eine Schaltung zur Steuerung von Tastaturfeldern und einer Anzeigevorrichtung und die Sprachverarbeitungsschaltung von einer Hauptsteuerschaltung über ein Bussystem, über das Sprachsignale, Steuersignale, Adreßsignale usw. befördert werden. In der Sprachverarbeitungsschaltung, mit der ein leitungsgebundener Handapparat und eine Lautsprecher/Mikrofon-Kombination zum Freisprechen vorhanden ist, ist ein Analog-Digital-Umsetzer und ein Digital-Analog-Umsetzer enthalten. Des weiteren ist noch eine Adapterschaltung vorgesehen, die mit dem Bussystem verbunden ist und die von einer Datenschnittstelle, zum Beispiel V24-Schnittstelle, Daten empfangen bzw. senden kann. Mit einem solchen Fernsprechapparat lassen sich beim Fernsprechen die Vorteile des dienstintegrierten digitalen Netzes nutzen. Jedoch ist der leitungsgebundene Handapparat mit einer Leitung mit dem stationären Unterteil des Fernsprechapparates verbunden, wodurch der Fernsprechteilnehmer in seiner Bewegungsfreiheit eingeschränkt ist.

Ein Fernsprechapparat mit mobilem Handapparat (schnurloser Fernsprechapparat), der beispielsweise aus dem Aufsatz "PATSY - ein schnurloses Komforttelefon" von J. Höflinger und G. Ranner, PKI-Technische Mitteilungen, Heft 2, 1988, Seiten 7 bis 14 bekannt ist, erhöht die Bewegungsfreiheit beim Fernsprechen. Ein solcher Fernsprechapparat mit mobilem Handapparat besitzt jedoch keine SO-Schnittstelle für das dienstintegrierte digitale Nachrichtennetz, sondern eine analoge a/b-Schnittstelle. Es könnte zwar ein Adapter zur Anpassung der a/b-Schnittstelle an die SO-Schnittstelle eingefügt werden. Ein solcher Adapter ist aber nicht preiswert. Außerdem ist es nicht möglich, die Vorteile des dienstintegrierten digitalen Nachrichtennetzes, wie sie mit einem Fernsprechapparat mit leitungsgebundenem Handapparat möglich sind, mit dem mobilen Handapparat auszunutzen.

Der Erfindung liegt daher die Aufgabe zugrunde, einen Fernsprechapparat zu schaffen, der dem Fernsprechteilnehmer weitere Möglichkeiten bietet.

Diese Aufgabe wird bei einem Fernsprechapparat der eingangs genannten Art dadurch gelöst, daß die Anschlußeinheit zum Übertragen der Signale über eine mit der Hauptschaltung gekoppelte Nebenschaltung und eine Funkübertragungsstrecke zu wenigstens einem mobilen Handapparat und zum Übertragen der Signale des leitungsgebundenen und mobilen Handapparates auf jeweils verschiedenen B-Kanälen des dienstintegrierten digitalen Nachrichtennetzes (ISDN) vorgesehen ist und daS die Nebenschaltung zum Aufbereiten und Übertragen der Signale zwischen der Anschlußeinheit und der Funkübertragungsstrecke vorgesehen ist.

Bei diesem Fernsprechapparat ist die Hauptschaltung, welche mit dem leitungsgebundenen Handapparat verbunden ist, mit einer Nebenschaltung gekoppelt, welche Signale von einem mobilen Handapparat empfängt bzw. zu diesem mobilen Handapparat sendet. Signale von der Nebenschaltung werden über die Hauptschaltung zur Anschlußeinheit an die SO-Schnittstelle des dienstintegrierten digitalen Nachrichtennetzes (ISDN) geführt und umgekehrt von der ISDN-SO-Schnittstelle über die Anschlußeinheit und über die Hauptschaltung zur Nebenschaltung geliefert. Die Signale der Nebenschaltung werden dabei über einen B-Kanal gegeben. Gleichzeitig können Signale von dem leitungsgebundenen Handapparat über den zweiten B-Kanal geliefert werden. Der Fernsprechapparat kann auch so ausgebildet sein, daß mehrere mobile Handapparate über eine Funkübertragungsstrecke mit der Nebenschaltung und somit mit der ISDN-SO-Schnittstelle Signale austauschen können.
Wegen der Nutzung der ISDN-SO-Schnittstelle durch den leitungsgebundenen und den mobilen Handapparat ist kein weiterer Adapter zum Anschluß an eine ISDN-Schnittstelle für den mobilen Handapparat erforderlich. Der Fernsprechteilnehmer, der den mobilen Handapparat bedient, kann außerdem die Vorteile des ISDN-Anschlusses nutzen. Des weiteren können gleichzeitig zwei Gespräche über einen Fernsprechapparat geführt werden und zwar können einerseits über den leitungsgebundenen und andererseits über den mobilen Handapparat Gespräche laufen.

Auf einfache Weise läßt sich ein Signalaustausch zwischen der Hauptschaltung und der Nebenschaltung realisieren, wenn die Schaltungskomponenten der Haupt- und Nebenschaltung über ein Bussystem untereinander und miteinander gekoppelt sind.

In einer Ausführungsform für die Hauptschaltung ist vorgesehen, daß diese
- eine mit dem leitungsgebundenen Handapparat gekoppelte Sprachverarbeitungsschaltung zum Austausch der Signale über das Bussystem zwischen der Sprachverarbeitungsschaltung und der Anschlußeinheit und
- eine Hauptsteuerschaltung zum Steuern der Anschlußeinheit und der Sprachverarbeitungsschaltung mittels Steuersignale über das Bussystem enthält.

Zur Übertragung von Daten, z.B. mit Hilfe eines Personal-Computers, ist in der Hauptschaltung eine mit dem Bussystem gekoppelte und von der Hauptsteuerschaltung gesteuerte Adapterschaltung vorhanden, welche Daten von einer Datenschnittstelle erhält. Eine solche Datenschnittstelle kann beispielsweise eine V24-Schnittstelle sein.

In einer Ausführungsform für die Nebenschaltung ist vorgesehen, daß diese
- eine Basis-Funkschaltung zur Übertragung und zum Empfang der Signale über die Funkübertragungsstrecke,
- eine über das Bussystem mit der Anschlußeinheit zum Austausch von Signalen vorgesehene und mit der Basis-Funkschaltung gekoppelte Basis-Sprachverarbeitungsschaltung und
- eine mit dem Bussystem gekoppelte Nebensteuerschaltung zum Steuern der Basis-Funkschaltung und der Basis-Sprachverarbeitungsschaltung enthält.

Über das Bussystem werden der Nebensteuerschaltung dabei Steuersignale von der Hauptsteuerschaltung geliefert. Die Basis-Sprachverarbeitungsschaltung setzt die über das Bussystem empfangenen digitalen Signale in analoge Signale um, die sie der Basis-Funkschaltung liefert, und setzt die von der Basis-Funkschaltung zugeführten analogen Signale in digitale Signale um.

In einer Ausführungsform für den mobilen Handapparat ist vorgesehen, daß dieser
- eine Mobil-Funkschaltung zur Übertragung und zum Empfang der Signale über die Funkübertragungsstrecke,
- eine Mobil-Sprachverarbeitungsschaltung zum Austausch der Sprachsignale zwischen der Mobil-Sprachverarbeitungsschaltung und der Mobil-Funkschaltung und
- eine Mobil-Steuerschaltung zum Steuern der Mobil-Sprachverarbeitungsschaltung und der Mobil-Funkschaltung enthält.

In dem mobilen Handapparat werden die von der Mobil-Funkschaltung ausgesendeten analogen Signale in der Mobil--Sprachverarbeitungsschaltung analog weiterverarbeitet und zu einem Lautsprecher im mobilen Handapparat geliefert und umgekehrt werden die von einem Mikrofon im mobilen Handapparat zugeführten analogen Signale über die Mobil-Sprachverabeitungsschaltung zur Mobil-Funkschaltung gegeben.

Der mobile Handapparat wird mit Energie von einer wiederaufladbaren Batterie versorgt. Zur Aufladung der Batterie dient ein Ladegerät. Es kann dabei vorgesehen werden, daß für eine im mobilen Handgerät vorgesehene Batterie ein Ladegerät vorhanden ist, welches zusammen mit der Nebenschaltung in einem Gehäuse untergebracht ist. Es kann aber auch ein Ladegerät als Ladeschale für den mobilen Handapparat ausgeführt werden, der an einem von dem Gehäuse mit der Haupt- und Nebenschaltung entfernten Ort untergebracht ist. Hierbei kann die Ladeschale im Gehäuse der Nebenschaltung entfallen.

An einen ISDN-Basisanschluß mit einer SO-Schnittstelle können bis zu acht Endgeräte angeschlossen sein. Jedes dieser Endgeräte ist unter einer gemeinsamen Rufwahlnummer erreichbar. Zusätzlich kann für jedes Endgerät eine Endgeräteauswahlziffer zur eigentlichen Rufwahlnummer hinzugeführt werden, wodurch jedes Endgerät einzeln erreichbar ist. Bei dem erfindungsgemäßen Fernsprechapparat kann vorgesehen werden, daß der leitungsgebundene Handapparat und wenigstens ein mobiler Handapparat durch Hinzufügung einer Endgeräteauswahlziffer zur Rufwahlnummer einzeln erreichbar sind.

Ein Ausführungsbeispiel der Erfindung wird nachstehend anhand der Zeichnung näher erläutert.

Es zeigen:
Fig. 1 einen schematisch dargestellten Fernsprechapparat für ein dienstintegriertes digitales Nachrichtennetz mit einem leitungsgebundenen und einem mobilen Handapparat und
Fig. 2 ein Blockschaltbild einer in dem Fernsprechapparat nach Fig. 1 verwendeten Schaltungsanordnung.

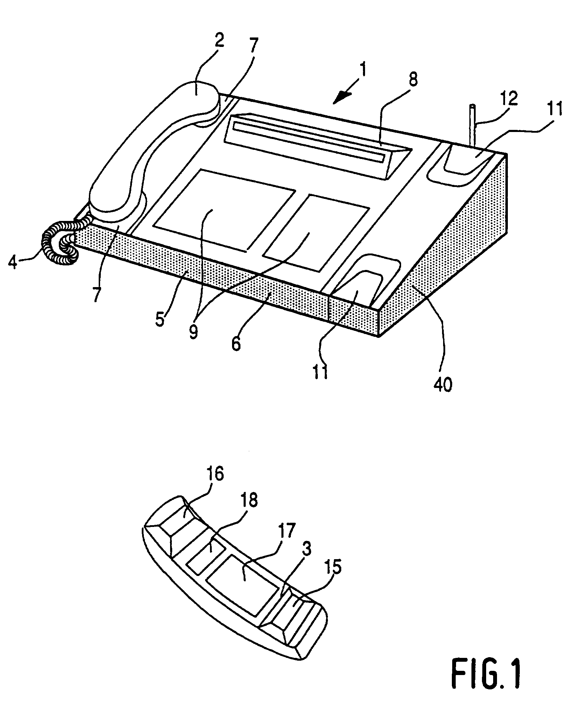

In Fig. 1 ist ein Fernsprechapparat 1 für ein dienstintegriertes digitales Nachrichtennetz (ISDN) mit einem leitungsgebundenen Handapparat 2 und einem mobilen Handapparat 3 dargestellt. Der leitungsgebundene Handapparat 2, der ein Mikrofon und einen Lautsprecher enthält, ist über eine Leitung 4 mit einem stationären Unterteil oder Gehäuse 5 des Fernsprechapparates 1 verbunden. Das Gehäuse 5 besteht aus einem Hauptmodul 6, welches Lademulden 7 für den leitungsgebundenen Handapparat 2, eine Anzeigevorrichtung 8 und Tastaturfelder 9 umfaßt. In dem Hauptmodul 6 ist auch eine Hauptschaltung 10 untergebracht. Mit dem Hauptmodul 6 ist ein zum Gehäuse 5 gehöriges Nebenmodul 40 verbunden. Das Nebenmodul 40 enthält Lademulden 11 für den mobilen Handapparat 3 und eine Antenne 12. Des weiteren ist in dem Nebenmodul 40 eine Nebenschaltung 13 und ein Ladegerät untergebracht, welches eine aufladbare Batterie 14 im mobilen Handapparat 3 auflädt, wenn der mobile Handapparat 3 sich in den Lademulden 11 befindet. Der mobile Handapparat 3 enthält ein Mikrofon 15, einen Lautsprecher 16, ein Tastenfeld 17, eine weitere Anzeigevorrichtung 18 und eine Mobilschaltung 19.

In dem Hauptmodul 6 ist des weiteren noch eine Freisprecheinrichtung mit einem Mikrofon und einem Lautsprecher, ein analoger Eingang, z.B. für die Übertragung von analogen Signalen zu einem Kassettenrecorder, und eine Datenschnittstelle, z.B. eine V24-Schnittstelle, an die eine Datenendeinrichtung, z.B. ein Personal-Computer, anschließbar ist, und eine ISDM-SO-Schnittstelle (Basisanschluß) vorhanden. Mit der ISDN-SO-Schnittstelle ist eine Leitungsverbindung gekoppelt, über die digitale Signale in zwei B-Kanälen zu je 64 kbit/s verarbeitet werden. Des weiteren ist noch ein D-Kanal mit 16 kbit/s für vermittlungstechnische Informationen vorgesehen.

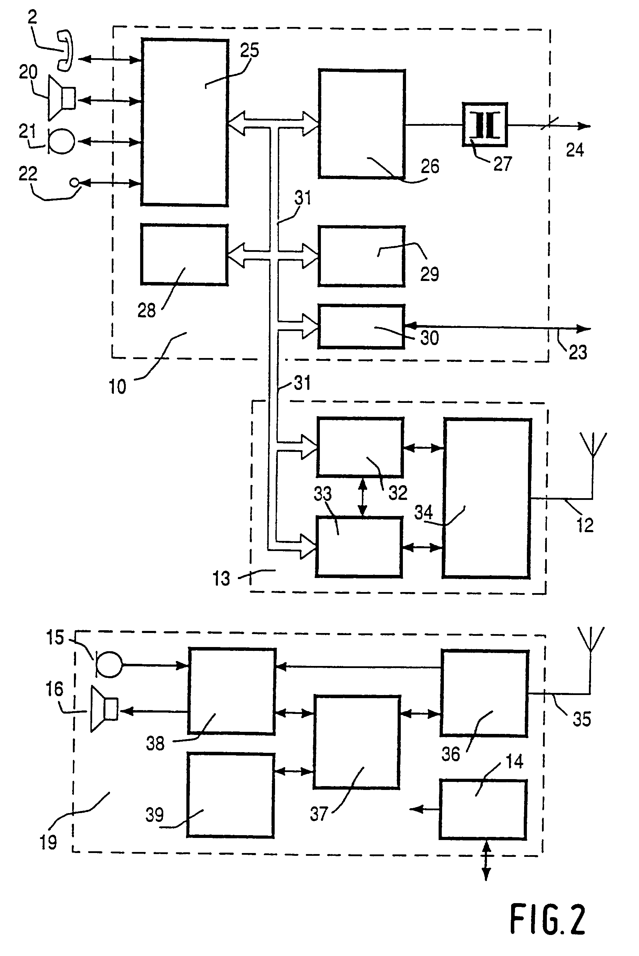

Die Fig. 2 zeigt ein Blockschaltbild der Hauptschaltung 10, der Nebenschaltung 13 und der Mobilschaltung 19. Die Hauptschaltung 10, welche in dem Hauptmodul 6 untergebracht ist, enthält eine Sprachverarbeitungsschaltung 25, eine Anschlußeinheit 26, eine Übertrageranordnung 27, eine Schaltung 28 zur Steuerung der Anzeigevorrichtung 8 und der Tastaturfelder 9, eine Hauptsteuerschaltung 29 und eine Adapterschaltung 30. Die ISDM-SO-Schnittstelle 24 ist mit der Anschlußeinheit 26 über die Übertrageranordnung 27 verbunden. Die Anschlußeinheit 26 ist noch an ein Bussystem 31 angeschlossen, über welches Steuersignale, Adreßsignale, und Sprachsignale geliefert werden. Die Sprachverarbeitungsschaltung 25, die ebenfalls mit dem Bussystem 31 verbunden ist, enthält einen Analog-Digital-Umsetzer und einen Digital-Analog-Umsetzer, um die von dem leitungsgebundenen Handapparat 2, dem Mikrofon 21 und dem analogen Eingang 22 gelieferten analogen Sprachsignale in digitale Sprachsignale bzw. die von dem Bussystem 31 gelieferten digitalen Sprachsignale in analoge Sprachsignale für den leitungsgebundenen Handapparat 2, den Lautsprecher 20 und den analogen Eingang 22 umzusetzen. Ebenfalls an das Bussystem 31 ist die Schaltung 28 zur Steuerung der Anzeigevorrichtung 8 und der Tastaturfelder 9 angeschlossen. Gesteuert werden die Sprachverarbeitungsschaltung 25, die Anschlußeinheit 26 und die Schaltung 28 von einer ebenfalls mit dem Bussystem 31 verbundenen Hauptsteuerschaltung 29. Mit der Datenschnittstelle 23 (V24-Schnittstelle) ist eine Adapterschaltung 30 verbunden, welche die von der Datenschnittstelle 23 gelieferten Signale auf das Bussystem 31 gibt bzw. die von dem Bussystem 31 empfangenen Signale zur Datenschnittstelle 23 liefert. Die in der Hautpschaltung 10 enthaltenen Schaltungskomponenten 25, 26, 27, 28, 29 und 30 sind näher in den Veröffentlichungen PKI-Technische Mitteilungen, Heft1, 1987, Seiten 13 bis 18 und PKI-Technische Mitteilungen, Heft 1, 1988, Seiten 19 bis 22 beschrieben.

Die Nebenschaltung 13 enthält eine mit dem Bussystem 31 verbundene Basis-Sprachverarbeitungsschaltung 32, eine Nebensteuerschaltung 33 und eine Basis-Funkschaltung 34. An die Basis-Funkschaltung 34 ist die Antenne 12 angeschlossen.In der Basis-Sprachverarbeitungsschaltung 32 wird mittels eines Digital-Analog-Umsetzers bzw. Analog-Digital-Umsetzers eine Umsetzung von analogen in digitale bzw. von digitalen in analoge Signale durchgeführt. In der Basis-Funkschaltung 34 werden die analogen Signale als hochfrequente Signale über die Antenne 12 zu einer Antenne 35 des mobilen Handapparates 3 gesendet bzw. die über die Antenne 12 ankommenden analogen hochfrequenten Signale empfangen. Die Nebensteuerschaltung 33, welche auch mit dem Bussystem 31 verbunden ist und Steuersignale von der Hauptsteuerschaltung 39 empfängt, steuert die Basis-Sprachverarbeitungsschaltung 32 und die Basis-Funkschaltung 34.

Die Mobilschaltung 19, welche in dem mobilen Handapparat 3 untergebracht ist, enthält die Batterie 14, eine Mobil-Funkschaltung 36, eine Mobil-Steuerschaltung 37, eine Mobil-Sprachverarbeitungsschaltung 38 und eine Schaltung 39 zur Steuerung der Anzeigevorrichtung 18 und des Tastaturfeldes 17. Mit der Mobil-Sprachverarbeitungsschaltung 38 ist das Mikrofon 15 und der Lautsprecher 16 verbunden. Die von der Mobil-Sprachverarbeitungsschaltung 38 verarbeiteten Signale werden der Mobil-Funkschaltung 36 geliefert bzw. von der Mobil-Funkschaltung 36 empfangen. Die Antenne 35 ist an die Mobil-Funkschaltung 36 angeschlossen. Gesteuert werden die Schaltungen 36, 38 und 39 von der Mobil-Steuerschaltung 37. Die Schaltungen 32 bis 34 in der Nebenschaltung 13 und die Schaltungen 36 bis 39 in der Mobilschaltung 19 sind jeweils näher in der Veröffentlichung PKI-Technische Mitteilungen, Heft 2, 1988, Seite 7 bis 14 beschrieben.

Der leitungsgebundene Handapparat 2 bzw. die Freisprecheinrichtung mit dem Lautsprecher 20 und dem Mikrofon 21 und der mobile Handapparat 3 sind unter einer gemeinsamen Rufwahlnummer erreichbar. Durch Hinzufügung einer Endgeräteauswahlziffer zur Rufwahlnummer läßt sich jedoch auch der leitungsgebundene Handapparat bzw. die Freisprecheinrichtung und der mobile Handapparat 3 einzeln anrufen. Es ist auch möglich, mehrere mobile Handapparate über die Nebenschaltung 13 mit Signalen über die Funkübertragungsstrecke zu versorgen. Jeder mobile Handapparat kann dabei ebenfalls durch Hinzufügung einer Endgeräteauswahlziffer zur Rufwahlnummer einzeln erreichbar sein.

## Patentansprüche

1. Fernsprechapparat für ein dienstintegriertes digitales Nachrichtennetz (ISDN) mit einer wenigstens zur Übertragung von Signalen zwischen einem leitungsgebundenen Handapparat (2) und einer Anschlußeinheit (26) dienenden Hauptschaltung (10), welche mit einer Schnittstelle (24) für das dienstintegrierte digitale Nachrichtennetz koppelbar ist,
dadurch gekennzeichnet,
das die Anschlußeinheit (26) zum Übertragen der Signale über eine mit der Hauptschaltung (10) gekoppelte Nebenschaltung (13) und eine Funkübertragungsstrecke zu wenigstens einem mobilen Handapparat (3) und zum Übertragen der Signale des leitungsgebundenen und mobilen Handapparates (2, 3) auf jeweils verschiedenen B-Kanälen des dienstintegrierten digitalen Nachrichtennetzes (ISDN) vorgesehen ist und daß die Nebenschaltung (13) zum Aufbereiten und Übertragen der Signale zwischen der Anschlußeinheit (26) und der Funkübertragungsstrecke vorgesehen ist.

2. Fernsprechapparat nach Anspruch 1,
dadurch gekennzeichnet,
daß Schaltungskomponenten der Haupt- und Nebenschaltung (10, 13) über ein Bussystem (31) untereinander und miteinander gekoppelt sind.

3. Fernsprechapparat nach Anspruch 2,
dadurch gekennzeichnet,
daß die Hauptschaltung (10)
- eine mit dem leitungsgebundenen Handapparat (2) gekoppelte Sprachverarbeitungsschaltung (25) zum Austausch der Signale über das Bussystem (31) zwischen der Sprachverarbeitungsschaltung (25) und der Anschlußeinheit (26) und
- eine Hauptsteuerschaltung (29) zum Steuern der Anschlußeinheit (26) und der Sprachverarbeitungsschaltung (25) mittels Steuersignale über das Bussystem (31) enthält.

4. Fernsprechapparat nach Anspruch 3,
dadurch gekennzeichnet,
daß in der Hauptschaltung (10) eine mit dem Bussystem (31) gekoppelte und von der Hauptsteuerschaltung (29) gesteuerte Adapterschaltung (30) vorhanden ist zum Erhalten der Daten von einer Datenschnittstelle (23).

5. Fernsprechapparat nach einem der Ansprüche 2 bis 4,
dadurch gekennzeichnet,
daß die Nebenschaltung (13)
- eine Basis-Funkschaltung (34) zur Übertragung und zum Empfang der Signale über die Funkübertragungsstrecke,
- eine über das Bussystem (31) mit der Anschlußeinheit (26) zum Austausch von Signalen vorgesehene und mit der Basis-Funkschaltung (34) gekoppelte Basis-Sprachverarbeitungsschaltung (32) und
- eine mit dem Bussystem (31) gekoppelte Nebensteuerschaltung (33) zum Steuern der Basis-Funkschaltung (34) und der Basis-Sprachverarbeitungsschaltung (32) enthält.

6. Fernsprechapparat nach einem der Ansprüche 2 bis 5,
dadurch gekennzeichnet,
daß der mobile Handapparat (3)
- eine Mobil-Funkschaltung (36) zur Übertragung und zum Empfang der Signale über die Funkübertragungsstrecke,
- eine Mobil-Sprachverarbeitungsschaltung (38) zum Austausch der Sprachsignale zwischen der Mobil-Sprachverarbeitungsschaltung (38) und der Mobil-Funkschaltung (36) und
- eine Mobil-Steuerschaltung (37) zum Steuern der Mobil-Sprachverarbeitungsschaltung (38) und der Mobil-Funkschaltung (36) enthält.

7. Fernsprechapparat nach einem der vorhergehenden Ansprüche,
dadurch gekennzeichnet,
daß für eine im mobilen Handapparat (3) vorgesehene Batterie (14) ein Ladegerät vorhanden ist, das sich zusammen mit der Nebenschaltung (13) in einem Gehäuse (5) befindet.

8. Fernsprechapparat nach einem der vorhergehenden Ansprüche,
dadurch gekennzeichnet,
daß der leitungsgebundene Handapparat (2) und wenigstens ein mobiler Handapparat (3) einzeln erreichbar sind durch Hinzufügung einer Endgeräteauswahlziffer zur Rufwahlnummer.

## Claims

1. A telephone set for an integrated services digital network (ISDN) comprising a main circuit (10) at least for transmitting signals between a handset (2) with a cord and a line terminating unit (26), which main circuit can be coupled to an interface (24) for the integrated services digital network, characterized in that the line terminating unit (26) is arranged for transmitting the signals over an auxiliary circuit (13) coupled to the main circuit (10) and a radio transmission link to at least one mobile handset (3) and for transmitting the signals of the handset (2) with a cord and the mobile handset (3) over different B-channels of the integrated services digital network (ISDN), and in that the auxiliary circuit (13) is arranged for processing and transmitting signals between the line terminating unit (26) and the radio transmission link.

2. The telephone set as claimed in Claim 1, characterized in that circuit components of the main and auxiliary circuits (10, 13) are intercoupled and coupled to each other over a bus system (31).

3. The telephone set as claimed in Claim 2, characterized in that the main circuit (10) comprises
- a speech processor (25) coupled to the handset (2) with a cord, for exchanging signals between the speech processor (25) and the line terminating unit (26) over the bus system (31), and
- a main control circuit (29) for controlling the line terminating unit (26) and the speech processor (25) by means of control signals over the bus system (31).

4. The telephone set as claimed in Claim 3, characterized in that an adapter circuit (30) coupled to the bus system (31) and controlled by the main control circuit (29) is included in the main circuit (10), in which the adapter circuit is used for receiving data from a data interface (23).

5. The telephone set as claimed in one of the Claims 2 to 4, characterized in that the auxiliary circuit (13) comprises
- a base radio circuit (34) for transmitting and receiving signals over the radio transmission link;
- a base speech processor (32) coupled to the base radio circuit (34) and the line terminating unit (26) over the bus system (31), for exchanging signals, and
- an auxiliary control circuit (33) coupled to the bus system (31) for controlling the base radio circuit (34) and the base speech processor (32).

6. The telephone set as claimed in one of the Claims 2 to 5, characterized in that the mobile handset (3) comprises:
- a mobile radio circuit (36) for transmitting and receiving signals over the radio transmission link,
- a mobile speech processor (38) for exchanging speech signals between the mobile speech processor (38) and the mobile radio circuit (36), and
- a mobile control circuit (37) for controlling the mobile speech processor (38) and the mobile radio circuit (36).

7. The telephone set as claimed in one of the preceding Claims, characterized in that a battery charger located in a housing (5) together with the auxiliary circuit (13) is included in the mobile handset (3) for a battery (14).

8. The telephone set as claimed in one of the preceding Claims, characterized in that the handset with a cord (2) and at least one mobile handset (3) can be reached individually by adding a terminal identification number to the dialling number.

## Revendications

1. Poste téléphonique pour un réseau numérique à intégration de services (RNIS) avec un circuit principal (10) servant au moins à la transmission de signaux entre un combiné raccordé par câble (2) et une unité de raccordement (26) qui peut être couplée à une interface (24) pour le réseau numérique à intégration de services,
caractérisé en ce
que l'unité de raccordement (26) pour la transmission des signaux par l'intermédiaire d'un circuit auxiliaire (13) couplé au circuit principal (10) et une liaison radio vers au moins un combiné portable (3) et pour la transmission des signaux du combiné raccordé par câble et du combiné portable (2,3) est prévue sur des canaux B respectivement différents du réseau numérique à intégration de services (RNIS) et que le circuit auxiliaire (13) est prévu pour le traitement et la transmission des signaux entre l'unité de raccordement (26) et la liaison radio.

2. Poste téléphonique selon la revendication 1,
caractérisé en ce
que des composants du circuit principal et du circuit auxiliaire (10, 13) sont couplés l'un à l'autre et l'un avec l'autre par l'intermédiaire d'un système de bus (31).

3. Poste téléphonique selon la revendication 2,
caractérisé en ce
que le circuit principal (10) contient
- un circuit de traitement vocal (25) couplé au combiné raccordé par câble (2) en vue de l'échange des signaux par l'intermédiaire du système de bus (31) entre le circuit de traitement vocal (25) et l'unité de raccordement (26), et
- un circuit de commande principal (29) pour la commande de l'unité de raccordement (26) et le circuit de traitement vocal (25) à l'aide des signaux de commande par l'intermédiaire du système de bus (31).

4. Poste téléphonique selon la revendication 3,
caractérisé en ce
qu'un circuit adaptateur (30) couplé au système de bus (31) et commandé par le circuit de commande principal (29) est présent dans le circuit principal (10) en vue de l'obtention de données par une interface de données (23).

5. Poste téléphonique selon l'une des revendications 2 à 4,
caractérisé en ce
que le circuit auxiliaire (13) contient
- un circuit radio de base (34) pour la transmission et la réception des signaux par l'intermédiaire de la liaison radio,
- un circuit de traitement vocal de base (32) prévu pour l'échange de signaux par l'intermédiaire du système de bus (31) avec l'unité de raccordement (26) et couplé avec le circuit radio de base (34), et
- un circuit de commande auxiliaire (33) couplé au système de bus (31) pour la commande du circuit radio de base (34) et du circuit de traitement vocal de base (32).

6. Poste téléphonique selon l'une des revendications 2 à 5,
caractérisé en ce
que le combiné portable (3) contient
- un circuit radio mobile (36) pour la transmission et la réception des signaux par l'intermédiaire de la liaison radio,
- un circuit de traitement vocal mobile (38) pour l'échange des signaux vocaux entre le circuit de traitement vocal mobile (38) et le circuit radio mobile (36), et
- un circuit de commande mobile (37) pour la commande du circuit de traitement vocal mobile (38) et le circuit radio mobile (36).

7. Poste téléphonique selon l'une des revendications précédentes,
caractérisé en ce
qu'un chargeur qui se trouve dans un boîtier (5) avec le circuit auxiliaire (13) est présent pour une batterie (14) prévue dans le combiné portable (3).

8. Poste téléphonique selon l'une des revendications précédentes,
caractérisé en ce
que le combiné raccordé par câble (2) et au moins un combiné portable (3) sont accessibles individuellement en ajoutant une extension de terminal au numéro d'appel.
